# EUROPEAN PATENT SPECIFICATION

(11) **EP 1 781 461 B1**
(45) Date of publication and mention of the grant of the patent: **20.05.2009**
(21) Application number: 05779396.0
(22) Date of filing: 17.08.2005
(51) Int. Cl.: B29D 11/00

(54) **USING HIGHER ORDER MATHEMATICAL FUNCTIONS TO CREATE ASYMMETRIC MOLDING BACK PIECES**
VERWENDUNG MATHEMATISCHER FUNKTIONEN HÖHERER ORDNUNG ZUR SCHAFFUNG ASYMMETRISCHER FORMRÜCKTEILE
UTILISATION DE FONCTIONS MATHEMATIQUES D'ORDRE SUPERIEUR POUR PRODUIRE DES PARTIES ARRIERE DE MOULE ASYMETRIQUES

(30) Priority: 18.08.2004 US 602512 P
(43) Date of publication of application: 09.05.2007
(73) Proprietor: NOVARTIS AG, 4056 Basel (CH)
(72) Inventor: KENDIG, Stephen, Atlanta, GA 30346 (US); NICULAS, Cornelius, Daniel, Suwanee, GA 30024 (US); YE, Ming, Fort Worth, TX 76132 (US); HONEA, Dee, Anna, Dawsonville, GA 30534 (US)
(74) Representative: Bohest AG
(86) International application number: PCT/EP2005/008921
(87) International publication number: WO 2006/018297

(56) References cited:
- EP-A1- 0 876 900

## Description

This invention is related to creation of a mold for an ophthalmic lens using higher order mathematical functions, such as non-uniform rational b splines (NURBs), to create surfaces that do not contact fluid optical material, such as molding back pieces. In particular, the present invention optimizes the flow of mold material. Additionally, use of the present invention creates substantially uniform thickness of the mold, minimizing optical distortions.

Contact lenses are widely used for correcting many different types of vision deficiencies. Current contact lenses have a relatively simple surface design, generally are rotationally-symmetric or toric, and can correct low-order aberrations of the human eye, such as defocus and astigmatism. More complex contact lenses can be used to correct high-order monochromatic aberrations of the human eye, such as a non-standard amount of spherical aberration, coma, and other irregular high-order aberrations. These high order aberrations blur images formed on the retina, which can impair vision. The impact of these higher-order aberrations on retinal image quality can become significant in some cases, for example, in older eyes, in normal eyes with large pupils, and in the eyes of many people with irregular astigmatism, keratoconus, corneal dystrophies, post penetrating keratoplasty, scarring from ulcerative keratitis, corneal trauma with and without surgical repair, and sub-optimal outcome following refractive surgery. For those people, visual acuity of 20/20 or better can be achieved with customized contact lenses or contact lenses capable of correcting high-order monochromatic aberrations of the human eye. To produce these types of lenses, precise lens designs and manufacturing techniques are needed.

EP-A-0876900 discloses a method for molding front and back curve mold halves which are used for subsequent molding of a soft contact lens therebetween, and more specifically, to a method and apparatus for creating and forming primary mold inserts having complex optical designs formed thereon and intermediate mold halves having the complex optical designs therein which are used to mold soft contact lenses therebetween.

Lenses may be created through molding, casting or lathe-cutting. For example, contact lenses that are manufactured in large numbers are typically produced by a double sided molding process. In those processes, the lenses are manufactured between two molds without subsequent machining of the surfaces or edges. Such mold processes are described, for example in U.S. Patent No. 4,347,198; 6,113,817; 6,149,842; and 5,894,002. As such, the geometry of the lens is determined by the geometry of the mold. In a typical molding system, lenses are cycled through a series of stations on a semi-continuous basis. The cyclic portion of lens production generally involves dispensing a liquid crosslinkable and/or polymerizable material into a female mold half, mating a male mold half to the female mold half, irradiating to crosslink and/or polymerize, separating the mold halves and removing the lens and packaging the lens. However, improvements in the efficiency of double-sided molding processes are always desirable. Thus, there is a need for molding production process improvements which include creating and using better molds.

One embodiment of the present invention is an optical mold with a male half with an anterior and a posterior surface where the anterior surface contacts the fluid optical material. This embodiment also includes a female half with an anterior and posterior surface where the anterior surface contacts the fluid optical material. In this embodiment, the posterior surface of said female half further is defined by a higher order mathematical function, according to claim 1.

In another embodiment, the anterior surface of the female half further is defined by a higher order mathematical function. In still another embodiment, the anterior surface of the male half may also be defined by a higher order mathematical function. In a related embodiment, the posterior surface of the male half may also be defined by a higher order mathematical function.

In some embodiments, the higher order mathematical function may be a non uniform rational b-spline. In an alternative embodiment, the mold may create uniform thickness in the lens section of the mold. In another embodiment, the female non-contact mold surface is offset normal from the female contact surface. In a preferred embodiment, the mold of the present invention improves the flow of a molding material.

The present invention may also include a method for making an ophthalmic lens. This method includes providing a fluid optical material; providing male and female mold halves, the female half having an anterior and posterior surface, where the anterior surface contacts fluid optical material; dispensing the fluid optical material into the mold; mating of male mold half; and exposing the mold and fluid optical material to an energy source. In this embodiment, the posterior surface of the female half is defined by a higher order mathematical function according to claim 9. In a related embodiment, the higher order mathematical function may be a non uniform rational b-spline.

In an alternative embodiment, the mold may create uniform thickness in the lens section of the mold. In a related embodiment, the posterior surface of the female mold half improves the flow of a molding material.

### BRIEF DESCRIPTION OF THE DRAWINGS

Figure 1 is a cross-sectional view of a typical mold assembly.
Figure 2A is a close-up cross-sectional view of the lens-defining portion of a mold half using a NURBs surface on the contact portion of the mold.
Figure 2B is a close-up cross-sectional view of the lens-defining portion of a mold half using a NURBs surface on both the contact and the non-contact portion of the mold.
Figure 3 depicts a method of measuring mold thickness used in conjunction with the present invention.

### DEFINITIONS

Unless defined otherwise, all technical and scientific terms used herein have the same meaning as commonly understood by one of ordinary skill in the art to which this invention belongs. Generally, the nomenclature used herein and the manufacturing procedures are well known and commonly employed in the art. Conventional methods are used for these procedures, such as those provided in the art and various general references. Where a term is provided in the singular, the inventors also contemplate the plural of that term.

An "ophthalmic device," as used herein, refers to a contact lens (hard or soft), a corneal onlay, implantable ophthalmic devices used in, on, or about the eye or ocular vicinity.
The term "contact lens" employed herein is used in a broad sense and is intended to encompass any hard or soft lens used on the eye or ocular vicinity for vision correction, diagnosis, sample collection, drug delivery, wound healing, cosmetic appearance (e.g., eye color modification), or other ophthalmic applications.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to poly(vinyl alcohol) (PVA), modified polyvinylalcohol (e.g., as nelfilcon A), poly(hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethane, polyurea, and the like. A hydrogel can be prepared according to any methods known to a person skilled in the art.

A "crosslinkable and/or polymerizable material" refers to a material which can be polymerized and/or crosslinked by actinic radiation to obtain crosslinked and/or polymerized material which are biocompatible. Examples of actinic radiation are UV irradiation, ionized radiation (e.g. gamma ray or X-ray irradiation), microwave irradiation, thermal radiation and the like.

"Polymer" means a material formed by polymerizing one or more monomers.
A "prepolymer" refers to a starting polymer which can be polymerized and/or crosslinked upon actinic radiation to obtain a crosslinked polymer having a molecular weight much higher than the starting polymer.

The term "fluid optical material" as used herein includes any prepolymer, polymer, crosslinkable and/or polymerizable material, or hydrogel material that is capable of flowing like a liquid.

### OVERVIEW

The present invention is generally related to the design of molds used to create ophthalmic lenses. In one aspect, the present invention provides a method to produce a back surface of a male or female mold half using non-uniform rational b-splines (NURBs) or other higher order mathematical functions, such as third order polynomials. A typical mold has a female mold half that includes an anterior molding surface that defines the anterior (i.e., convex curvature) surface of a molded contact lens and a posterior surface that does not contact fluid optical material. A male mold half preferably has a posterior molding surface that defines the posterior (i.e., concave curvature) surface of the molded contact lens and an anterior surface that does not contact fluid optical material. The female and male mold halves may be configured to receive each other such that a contact lens forming cavity is formed between the anterior and posterior molding surfaces. The back surface of the mold is preferably offset normal to the front surface, which also uses higher order mathematical functions. Such symmetry improves the flow of mold material into the mold base and hence, improves the quality of the ophthalmic lens by reducing optical distortions.

As will be readily appreciated by those of skill in the art, many different types of molds and lenses are possible with the present invention. Molds of the present invention can be used to produce either hard or soft lenses. Molds of the present invention can be used to create toric, multifocal, toric multifocal ophthalmic lens, customized ophthalmic lenses, or the like. Molds of the present invention may also create lenses designed to correct more than one type of aberration, such as, for example, presbyopia and astigmatism.

### LENS MANUFACTURE

Ophthalmic lenses may be produced by double-sided molding (DSM) processes. These processes typically involve dispensing a liquid pre-polymer into a female mold half, mating a male mold half to the female, and applying ultraviolet radiation to polymerize the prepolymers. The female mold half may have a molding surface that defines the anterior (front) surface of a contact lens. The male mold half may have a molding surface that defines the posterior (back) surface of the lens. The polymerized lens removed from the molds in a DSM process may require subsequent treatment, such as surface treatment and/or an extraction process.

DSM processes, such as described in U.S. Pat. No. 4,347,198, utilize a concave (also known as "female" or "front surface") mold half which mates with a convex (also known as "male" or "back surface") mold half. In the DSM process, liquid monomer or polymer precursor is dispensed into the female mold half, the male mold half is affixed to the female mold half, and light (e.g. ultraviolet) is applied to initiate polymerization or crosslinking and form a solid lens. The mold is then opened to allow removal of the lens. Typically, the mold is not reusable after it is opened.

### LENS DESIGN

The design of the lens involves the creation of a zone or multiple zones within the material bulk within the lens geometry. In general, most lenses have a substantially uniform index of refraction. The index of refraction, in combination with or in lieu of a surface geometry optical design preferably creates the optical power of the lens. The location of these zones is determined by the desired optical design of the lens.

It is well known to those skilled in the art that a lens design for an ophthalmic lens can be carried out by using an optical computer aided design (CAD) system and a mechanical CAD system. An optical CAD system is used to design an optical model lens. "An optical model lens" refers to an ophthalmic lens that is designed in a computer system and generally does not contain other non-optical systems which are parts of an ophthalmic lens. Exemplary non-optical systems of a contact lens include, but are not limited to bevel, lenticular, and edge that joins the anterior and posterior surfaces of a contact lens.

"A bevel" refers to a non-optical surface zone located at the edge of the posterior surface of a contact lens. Generally, the bevel is a significantly flatter curve and is usually blended with the base curve (optical posterior surface) of a contact lens and appears as an upward taper near the edge. This keeps the steeper base curve radius from gripping the eye and allows the edge to lift slightly. Edge lift is important for the proper flow of tears across the cornea and makes the lens fit more comfortably.

"A lenticular" refers to a non-optical surface zone of the anterior surface of a contact lens between the optical zone and the edge. One function of the lenticular is to control the thickness of the lens edge, another such function is to control lens stability as related to rotation or translation.

Any known, suitable optical computer aided design (CAD) system may be used to design an optical model lens. Preferably, a mechanical CAD system capable of representing precisely and mathematically high order surfaces is used to design an ophthalmic lens and associated mold. An example of such mechanical CAD system is Pro/Engineer.

Exemplary optical computer aided design systems include, but are not limited to Advanced System Analysis program (ASAP) from Breault Research Organization and ZEMAX (Focus Software, Inc.). Preferably, the optical design will be performed using Advanced System Analysis program (ASAP) from Breault Research Organization with input from ZEMAX (Focus Software, Inc.). The optical model lens is then passed into a mechanical CAD system, for example, Pro/Engineer. The associated mold and tooling designs are generated from the mechanical CAD system.

The design of the optical model lens and the subsequent associated mold can be transformed by, for example, a mechanical CAD system, into a set of mechanical lens design that includes optical zones, non-optical zones and non-optical features. Exemplary non-optical zones and features of a mold include, but are not limited to features that create bevel, lenticular, edge that joins the anterior and posterior surfaces of a contact lens, orientation features, and the like. Exemplary orientation features include, but are not limited to, features that are adapted to create a prism ballast or the like that uses a varying thickness profile to control the lens orientation, a faceted surface (e.g., ridge-off zone) in which parts of the lens geometry is removed to control the lens orientation, a ridge feature which orients the lens by interacting with the eyelid. Preferably, when transforming the design of an optimized optical model lens and associated mold into a mechanical lens and associated mold design, some common features of a family of contact lenses can be incorporated.

Preferably, the design of an ophthalmic lens and associated mold may be translated back and forth between the optical CAD and mechanical CAD systems using a translation format which allows a receiving system, either optical CAD or mechanical CAD, to construct NURBs or Bezier surfaces of an intended design. Exemplary translation formats include, but are not limited to, VDA (verband der automobilindustrie) and IGES (Initial Graphics Exchange Specification). By using such translation formats, the overall surface of a lens or mold can be in a continuous form that facilitates the production of lenses or molds having radially asymmetrical shapes. Bezier and NURBs surface are particular advantageous for presbyopic and astigmatic designs because multiple zones can be blended, analyzed and optimized.

Advances in computer aided design (CAD) technologies may permit to design a customized contact lens, for example, using polynomials and/or spline-based mathematical functions, and then to construct mathematically high order surfaces, such as NURBS or Bezier surfaces, of an intended design. The mathematically high order surfaces of the intended design then need to be converted into control signals, which control a computer controllable manufacturing device (for example, lathes, grinding and milling machines, molding equipments, or lasers) to directly produce a contact lens or molding tools for producing a contact lens.

### MOLD DESIGN

After a lens design is created, its' model is preferably expanded to produce a model optical mold. In some cases, the lens model must be altered to account for various features of the mold and the lens, such as shrinkage, for example. The alterations may include designing for an increased center thickness or other lens parameters.

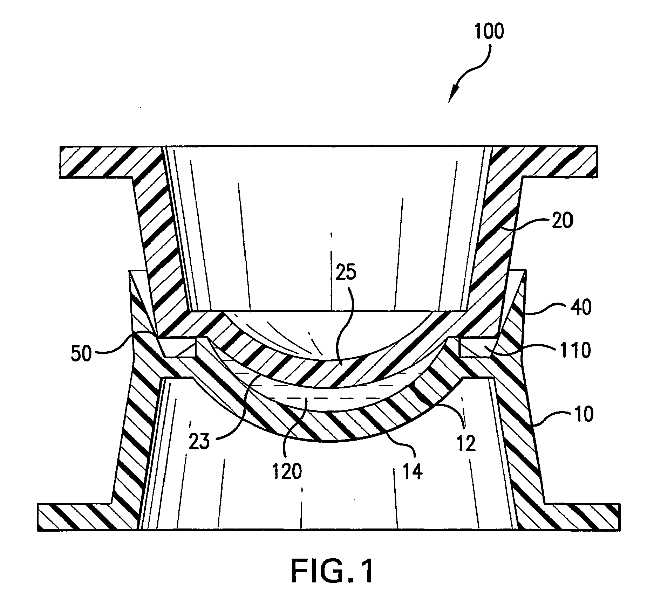

FIG. 1 schematically illustrates a mold 100 used in the methods and apparatus of the invention. The mold 100 comprises a female mold half 10 having an anterior molding surface 12 defining the anterior (i.e., convex curvature) surface of a molded contact lens and a posterior surface 14 that does not contact fluid optical material. The non-contact posterior surface 14 may also be called a back piece of the mold. Male mold half 20 preferably has a posterior molding surface 23 defining the posterior (i.e., concave curvature) surface of the molded contact lens and an anterior surface 25 that does not contact fluid optical material. The female mold half 10 and a male mold half 20 are configured to receive each other such that a contact lens forming cavity 120 is formed between the anterior and posterior molding surfaces.

The female mold half 10 may include a collar (or up-protruding flange) 40 which is attached to or preferably integral part of the female mold half 10. In an embodiment with a collar, the collar 40 encircles parts of the male mold half 20 to provide a tight seal 50 between the female and male mold halves when the mold is closed. It is understood that the collar can be provided on either of the male and female mold halves. The term "collar" as used herein refers to a protruding peripheral circular part of one of the two mating mold halves, which can be attached to or preferably integral part of that mold half and which can encircle the other mold half to provide a tight seal between the two mold halves.

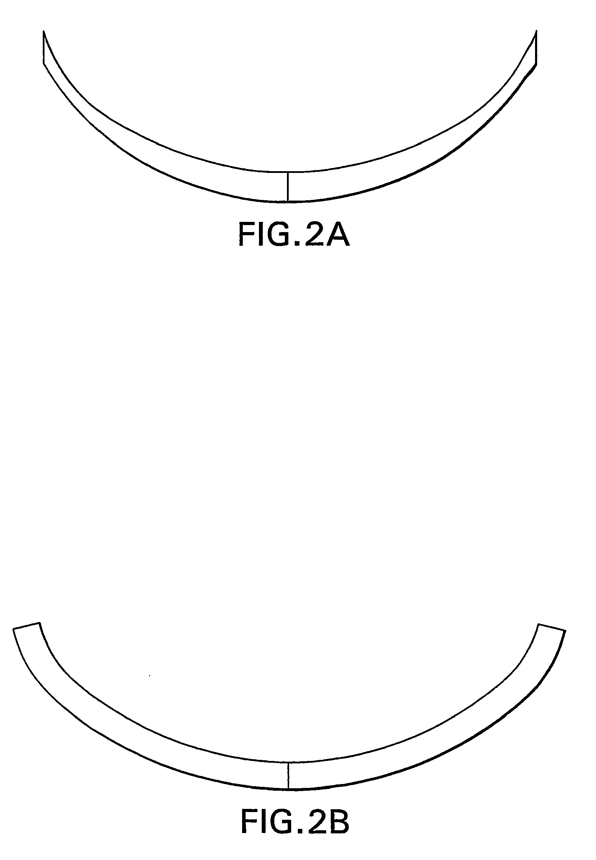

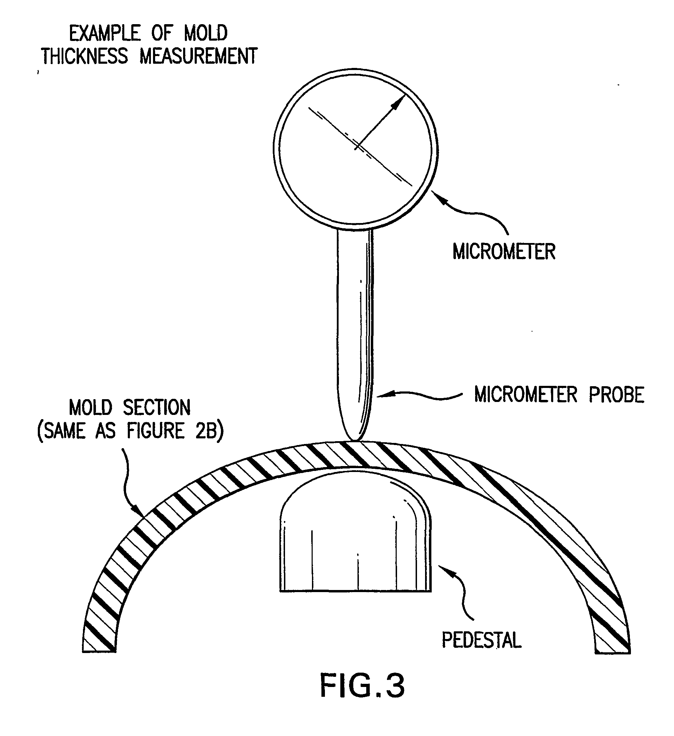

Typically, the specifications for the design of the surfaces that contact fluid optical material ("contact surfaces") are very precise and may be designed using higher order mathematical equations, such as NURBS, Bezier surfaces, and the like as shown in Figure 2A. The present invention seeks to provide a similar design for those surfaces that do not contact the fluid optical material to improve fluid optical material flow and achieve a uniform thickness throughout the mold region. For example if a contact surface is designed using a NURBs equation, the present invention seeks to assign the same equation to a non-contact surface increased by an offset value normal to the contact surface, as shown in Figure 2B. Although the lens mold(s) of the present invention may be designed to achieve a uniform thickness through out the mold region, this thickness may deviate by about 10 microns. The uniform thickness allows the flow front to move forward as a straight line rather than curving around the lens region. Additionally, in some embodiments of the present invention one particular mold design may be used to create lenses of varying powers, such as for example, a -2.00 back piece design may cover powers from -1.50 to -2.25. In this embodiment the -2.00 mold may have a more uniform thickness and the mold thickness may change slightly for the remaining powers, hence a possible 10 micron deviation. Figure 3 depicts one way of measuring mold thickness in accordance with the present invention. In a preferred embodiment, measurements are made normal to a concave mold surface using a micrometer and micrometer probe.

Mold halves 10 and 20 can be first injection molded from a plastic resin in an injection molding apparatus, as well known to a person skilled in the art. To create a desired lens, a specific amount of a polymerizable lens-forming material is typically dispensed into the female mold half 10 by means of a dispensing device and then the male mold half 20 is put on and the mold is closed. As the mold closes, any excess unpolymerized lens-forming material is pressed into an overflow provided on the female mold half 10. This mold material may be, for example, one or more of the following materials: polypropylene, polycarbonate, polystyrene, polyethylene, or polyolefins.

Subsequently, the closed mold 100 containing the polymerizable lens-forming material is subjected to actinic irradiation (e.g., UV radiation), at least in the region of the lens forming cavity 120. For this purpose, at least one of the mold halves is transparent to the actinic radiation (e.g., UV light) at least in the region of the molding surface. Thus, at least the polymerizable lens-forming material in the lens forming cavity 120 is polymerized. It is also possible for any polymerizable lens-forming material in the overflow 110 to be polymerized. This is advantageous in the respect that, when the mold is opened, the excess polymerized lens-forming material then remains in the overflow 110 of the female mold half 10, while the contact lens adhering to the female/male mold half 20 can be removed and further processed together with male/female mold half 20.

## Claims

1. An optical mold comprising
a male half (20) with an anterior (25) and a posterior (23) surface, wherein said anterior surface contacts fluid optical material; and
a female half (10) with an anterior (12) and posterior (14) surface, wherein said anterior surface contacts fluid optical material; **characterized in that**
said posterior surface of said female half further is defined by a higher order mathematical function.

2. The mold of claim 1, wherein said anterior surface of said female half further is defined by a higher order mathematical function.

3. The mold of claim 1, wherein said anterior surface of said male half is defined by a higher order mathematical function.

4. The mold of claim 1, wherein said posterior surface of said male half is defined by a higher order mathematical function.

5. The mold of claim 2, wherein said higher order mathematical function comprises a non uniform rational b-spline.

6. The mold of claim 1, wherein said mold creates uniform thickness in the lens section of said mold.

7. The mold of claim 2, wherein said female non-contact mold surface is offset normal from said female contact surface.

8. The mold of claim 1, wherein said mold improves the flow of a molding material.

9. A method for making an ophthalmic lens comprising:
providing a fluid optical material;
providing male (20) and female (10) mold halves, wherein said female half comprises an anterior (12) and posterior (14) surface, wherein said anterior surface contacts fluid optical material; dispensing said fluid optical material into said mold; and
exposing said mold and fluid optical material to an energy source
wherein said posterior surface (14) of said female half is defined by a higher order mathematical function.

10. The method of claim 9, wherein said higher order mathematical function comprises a non uniform rational b-spline.

11. The method of claim 9, wherein said mold creates uniform thickness in the lens section of said mold.

12. The method of claim 9, wherein said female posterior mold surface is offset normal from said female anterior surface.

13. The method of claim 9, wherein said posterior surface of said female mold half improves the flow of a molding material.

## Patentansprüche

1. Optische Form umfassend
eine männliche Hälfte (20) mit einer vorderseitigen (25) und einer rückseitigen (23) Oberfläche, wobei die vorderseitige Oberfläche Kontakt hat mit fluidem optischen Material; und
eine weibliche Hälfte (10) mit einer vorderseitigen (12) und einer rückseitigen (14) Oberfläche, wobei die vorderseitige Oberfläche Kontakt hat mit dem fluiden optischen Material, **dadurch gekennzeichnet, dass**
die rückseitige Oberfläche der weiblichen Hälfte ferner durch eine mathematische Funktion höherer Ordnung definiert ist.

2. Form gemäss Anspruch 1, wobei die vorderseitige Oberfläche der weiblichen Hälfte ferner durch eine mathematische Funktion höherer Ordnung definiert ist.

3. Form gemäss Anspruch 1, wobei die vorderseitige Oberfläche der männliche Hälfte durch eine mathematische Funktion höherer Ordnung definiert ist.

4. Form gemäss Anspruch 1, wobei die rückseitige Oberfläche der männliche Hälfte durch eine mathematische Funktion höherer Ordnung definiert ist.

5. Form gemäss Anspruch 2, wobei die mathematische Funktion höherer Ordnung eine nicht-uniforme rationale b-Spline Funktion umfasst.

6. Form gemäss Anspruch 1, wobei die Form eine gleichmässige Dicke des Linsenbereichs der Form gewährleistet.

7. Form gemäss Anspruch 2, wobei die Nichtkontakt-Oberfläche der weiblichen Form senkrecht achsversetzt ist zur Kontakt-Oberfläche der weiblichen Form.

8. Form gemäss Anspruch 1, wobei die Form den Fluss eines linsenbildenden Materials verbessert.

9. Verfahren zur Herstellung einer ophthalmischen Linse umfassend:
Bereitstellen eines fluiden optischen Materials;
Bereitstellen einer männlichen (20) und einer weiblichen (10) Formhälfte, wobei die weibliche Hälfte eine vorderseitige (12) und eine rückseitige (14) Oberfläche hat, wobei die vorderseitige Oberfläche Kontakt hat mit fluidem optischen Material;
Einfüllen des fluiden optischen Materials in die Form; und
Belichten der Form und des fluiden optischen Materials mit einer Energiequelle
wobei die rückseitige Oberfläche (14) der weiblichen Hälfte durch eine mathematische Funktion höherer Ordnung definiert ist.

10. Verfahren gemäss Anspruch 9, wobei die mathematische Funktion höherer Ordnung eine nicht-uniforme rationale b-Spline Funktion umfasst.

11. Verfahren gemäss Anspruch 9, wobei die Form eine gleichmässige Dicke des Linsenbereichs der Form gewährleistet.

12. Verfahren gemäss Anspruch 9, wobei die rückseitige Oberfläche der weiblichen Form senkrecht achsversetzt ist zur vorderseitigen Oberfläche der weiblichen Form.

13. Verfahren gemäss Anspruch 9, wobei die rückseitige Oberfläche der weiblichen Formhälfte den Fluss eines linsenbildenden Materials verbessert.

## Revendications

1. Moule optique comprenant
- une moitié mâle (20) comportant une surface antérieure (25) et une surface postérieure (23), la surface antérieure étant en contact avec un matériau optique fluide ; et
- une moitié femelle (10) comportant une surface antérieure (12) et une surface postérieure (14), la surface antérieure étant en contact avec le matériau optique fluide ;
**caractérisé en ce que** ladite surface postérieure de ladite moitié femelle est en outre définie par une fonction mathématique d'ordre supérieur.

2. Moule selon la revendication 1, dans lequel ladite surface antérieure de ladite moitié femelle est en outre définie par une fonction mathématique d'ordre supérieur.

3. Moule selon la revendication 1, dans lequel ladite surface antérieure de ladite moitié mâle est définie par une fonction mathématique d'ordre supérieur.

4. Moule selon la revendication 1, dans lequel ladite surface postérieure de ladite moitié mâle est définie par une fonction mathématique d'ordre supérieur.

5. Moule selon la revendication 2, dans lequel ladite fonction mathématique d'ordre supérieur comprend une bêta-spline rationnelle non uniforme.

6. Moule selon la revendication 1, créant une section de lentille moulée d'épaisseur uniforme.

7. Moule selon la revendication 2, dans lequel ladite surface de non contact femelle du moule est décalée normalement par rapport à ladite surface de contact femelle.

8. Moule selon la revendication 1, dans lequel ledit moule améliore l'écoulement d'un matériau de moulage.

9. Procédé de fabrication d'une lentille ophtalmique comprenant les étapes consistant à :
- fournir un matériau optique fluide ;
- fournir des moitiés de moule mâle (20) et femelle (10), où ladite moitié femelle comporte une surface antérieure (12) et une surface postérieure (14), ladite surface antérieure étant en contact avec le matériau optique fluide ;
- verser ledit matériau optique fluide dans ledit moule ; et
- exposer ledit moule et ledit matériau optique fluide à une source d'énergie, dans lequel ladite surface postérieure (14) de ladite moitié femelle est définie par une fonction mathématique d'ordre supérieur.

10. Procédé selon la revendication 9, dans lequel ladite fonction mathématique d'ordre supérieur comprend une bêta-spline rationnelle non uniforme.

11. Procédé selon la revendication 9, dans lequel ledit moule crée une section de lentille moulée d'épaisseur uniforme.

12. Procédé selon la revendication 9, dans lequel ladite surface de moule postérieure femelle est décalé normalement par rapport à ladite surface antérieure femelle.

13. Procédé selon la revendication 9, dans lequel ladite surface postérieure de ladite moitié de moule femelle améliore l'écoulement d'un matériau de moulage.
